(19) Europäisches Patentamt
European Patent Office
Office européen des brevets

(11) **EP 4 773 591 A1**

(12) **EUROPEAN PATENT APPLICATION**
published in accordance with Art. 153(4) EPC

(43) Date of publication:
**08.07.2026 Bulletin 2026/28**

(21) Application number: **24859932.6**

(22) Date of filing: **29.08.2024**

(51) International Patent Classification (IPC):
**H04N 9/31** (2006.01)     **H04N 23/745** (2023.01)

(52) Cooperative Patent Classification (CPC):
**H04N 9/31; H04N 23/745**

(86) International application number:
**PCT/JP2024/031055**

(87) International publication number:
**WO 2025/047907 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 JP 2023141792**

(71) Applicants:
• **Kose Corporation**
  **Tokyo 103-8251 (JP)**
• **Institute of Science Tokyo**
  **Tokyo 152-8550 (JP)**

(72) Inventors:
• **ISHIZUKI Nao**
  **Tokyo 114-0005 (JP)**
• **KAKIMOTO Ryo**
  **Tokyo 114-0005 (JP)**
• **OHISHI Kaoru**
  **Tokyo 114-0005 (JP)**
• **WATANABE Yoshihiro**
  **Tokyo 152-8550 (JP)**

(74) Representative: **Scott, Stephen John**
  **YUJA IP LAW**
  **East Coast House**
  **25 Skeldergate**
  **York YO1 6DH (GB)**

(54) **SYSTEM, INFORMATION PROCESSING DEVICE, AND METHOD FOR OPERATING SYSTEM**

(57)     A system includes an imaging apparatus configured to capture an image of an object, an information processing apparatus configured to detect a target area in the object based on a captured image of the object, and a projection apparatus configured to project colored light onto the target area. The information processing apparatus is configured to instruct the projection apparatus regarding a color of the colored light so that reflected light at the target area exhibits a target color, based on information on a reflectance spectrum at the target area and information on a light source spectrum of the projection apparatus.

*FIG. 2*

```
            Start
              │
    Acquire captured image          ─── S20
              │
    Extract target area             ─── S21
              │
    Acquire information on the reflectance spectrum
    of the target area              ─── S22
              │
    Acquire cosmetic film information ─── S23
              │
    Acquire information on the light source spectrum
    of the lighting apparatus       ─── S24
              │
    Acquire information on the light source spectrum
    of the projection apparatus     ─── S25
              │
    Determine the adjusted color of the colored light ─── S26
              │
    Transmit an instruction to project colored light ─── S27
              │
             End
```

EP 4 773 591 A1

**Description**

CROSS-REFERENCE TO RELATED APPLICATION

The present application claims priority to Japanese Patent Application No. 2023-141792 filed on August 31, 2023, the entire contents of which are incorporated herein by reference.

TECHNICAL FIELD

The present disclosure relates to a system, an information processing apparatus, and a method of operating a system.

BACKGROUND

Techniques have been proposed for simulating makeup instead of actually applying cosmetic makeup to a user's face. For example, projection mapping has been proposed, in which colored light that resembles makeup is projected onto the face of a user by a projection apparatus. Patent Literature (PTL) 1 discloses a technique related to color correction of colored light in projection mapping.

CITATION LIST

Patent Literature

PTL 1: JP 2017-147638 A

SUMMARY

(Technical Problem)

Techniques for projecting colored light onto an object have room for improvement in the accuracy of expressing a desired color.
The following describes an information processing apparatus and the like that can improve the accuracy of color representation of colored light projected onto an object.

(Solution to Problem)

To solve the aforementioned problem, a system according to the present disclosure includes an imaging apparatus configured to capture an image of an object, an information processing apparatus configured to detect a target area in the object based on a captured image of the object, and a projection apparatus configured to project colored light onto the target area, wherein the information processing apparatus is configured to instruct the projection apparatus regarding a color of the colored light so that reflected light at the target area exhibits a target color, based on information on a reflectance spectrum at the target area and information on a light source spectrum of the projection apparatus.
An information processing apparatus according to the present disclosure is an information processing apparatus comprising a communication interface and a controller configured to communicate via the communication interface, wherein the controller is configured to acquire a captured image of an object from an imaging apparatus, detect a target area in the object based on the captured image, instruct a projection apparatus regarding a color of colored light so that reflected light at the target area exhibits a target color, based on information on a reflectance spectrum at the target area and information on a light source spectrum of the projection apparatus, and cause the projection apparatus to project the colored light onto the target area.
A method of operating a system according to the present disclosure is a method of operating a system comprising an imaging apparatus, a projection apparatus, and an information processing apparatus, the method comprising capturing, by the imaging apparatus, an image of an object, detecting, by the information processing apparatus, a target area in the object based on a captured image of the object and instructing the projection apparatus regarding a color of the colored light so that reflected light at the target area exhibits a target color, based on information on a reflectance spectrum at the target area and information on a light source spectrum of the projection apparatus, and projecting, by a projection apparatus, the colored light onto the target area.

(Advantageous Effect)

According to the information processing apparatus and the like of the present disclosure, the accuracy of color representation of colored light projected onto an object can be improved.

BRIEF DESCRIPTION OF THE DRAWINGS

In the accompanying drawings:

FIG. 1 is a diagram illustrating an example configuration of an information processing system;
FIG. 2 is a flowchart illustrating an example of an operation procedure of an information processing apparatus; and
FIG. 3 is a diagram illustrating an example of a target area.

DETAILED DESCRIPTION

Hereinafter, an embodiment of the present disclosure will be described.

[System configuration]

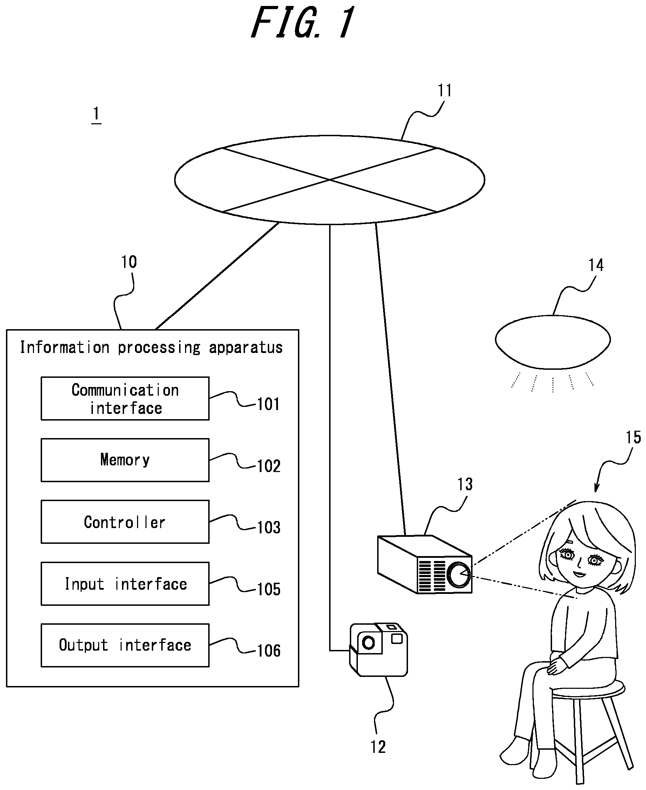

FIG. 1 is a diagram illustrating an example configuration of an embodiment of the present disclosure. The information processing system 1 includes an information processing apparatus 10, an imaging apparatus 12, and a projection apparatus 13, which are connected to each other via a network 11 so as to be able to communicate information to each other. The information processing apparatus 10 is, for example, one or more personal computers. The information processing apparatus 10 may include a tablet terminal device, a smartphone, or the like. The imaging apparatus 12 is a camera that is installed in a position where it can capture an image of a user 15. The projection apparatus 13 has a light source and an optical system for emitting colored light. The projection apparatus 13 projects a representation of makeup onto the face of the user 15 using the colored light. The user 15 is illuminated by ambient light from the lighting apparatus 14. The lighting apparatus 14 is installed in a room such as a store or studio where the user 15 performs makeup simulations. The lighting apparatus 14 includes a light source that emits ambient light. The network 11 is, for example, an in-house local area network (LAN) for a store, office, or the like. The network 11 may include the Internet, an ad-hoc network, a metropolitan area network (MAN), a mobile communication network, or other networks.
The information processing system 1 supports simulation of cosmetic makeup on the face of the user 15. The information processing system 1 includes the imaging apparatus 12 that captures an image of an object, the information processing apparatus 10 that detects a target area in the object based on a captured image of the object, and the projection apparatus 13 that projects colored light onto the target area. Here, in a case in which the object is the face of the user 15, the target area is, for example, the eyes, cheeks, lips, or the like, to which the cosmetic film is to be applied. The skin color of the target area differs for each user, and the cosmetic film transmits and reflects light to an extent that corresponds to color. Therefore, the color exhibited by the target area to which the cosmetic film is applied (hereinafter referred to as the cosmetics area), i.e., the spectrum of light reflected at the cosmetics area, differs depending on the combination of the skin color of the target area and the color of the cosmetic film. To express the color of such a cosmetics area, i.e., a target color, the information processing apparatus 10 instructs the projection apparatus 13 regarding the color (hereinafter referred to as the adjusted color) of colored light so that the target area exhibits the target color, based on the reflectance spectrum at the target area and the light source spectrum of the projection apparatus 13. By thus determining the adjusted color of the colored light according to the skin color of the target area, the characteristics of the projection apparatus 13, and the like, the accuracy can be improved when using colored light to express a target color of a cosmetics area for which the target color differs due to the combination of the skin color of the user 15 and the color of the cosmetic film.
Next, the configuration of the information processing apparatus 10 will be described.
The information processing apparatus 10 includes a communication interface 101, a memory 102, a controller 103, an input interface 105, and an output interface 106. In a case in which the information processing apparatus 10 is configured with two or more computers that can communicate with each other, these components are appropriately arranged in the two or more computers.
The communication interface 101 includes one or more interfaces for communication. The interface for communication is, for example, an interface that complies with wired or wireless LAN standards and connects to a nearby router device. The interface for communication may include a module or the like that supports short-range wireless communication such as Bluetooth® (Bluetooth is a registered trademark in Japan, other countries, or both), or that complies with a mobile communication standard such as Long Term Evolution (LTE), 4th Generation (4G), or 5th Generation (5G). The communication interface 101 receives information used in the operation of the information processing apparatus 10 and transmits information obtained by the operations of the information processing apparatus 10. The information processing apparatus 10 is connected to the network 11 by the communication interface 101 and communicates information with other devices via the network 11 or by a direct peer-to-peer connection or the like.

The memory 102 includes, for example, one or more semiconductor memories that function as a main storage device, an auxiliary storage device, or a cache memory, one or more magnetic memories, one or more optical memories, or a combination of at least two of these. The semiconductor memory is, for example, a random access memory (RAM) or a read only memory (ROM). The RAM is, for example, a static RAM (SRAM) or a dynamic RAM (DRAM). The ROM is, for example, an electrically erasable programmable ROM (EEPROM). The memory 102 stores information used in the operations of the controller 103 and information obtained by the operations of the controller 103.

The controller 103 includes one or more processors, one or more dedicated circuits, or a combination thereof. The processor is, for example, a general-purpose processor such as a central processing unit (CPU), or a dedicated processor that is dedicated to specific processing, such as a graphics processing unit (GPU). Examples of dedicated circuits include a field-programmable gate array (FPGA) and an application specific integrated circuit (ASIC). The controller 103 executes information processing related to the operation of the information processing apparatus 10 while controlling each component of the information processing apparatus 10.

The functions of the information processing apparatus 10 are realized by a processor included in the controller 103 executing a control program. The control program is a program for causing the processor to function as the controller 103. Some or all of the functions of the information processing apparatus 10 may be realized by a dedicated circuit included in the controller 103. Furthermore, the control program may be stored in a non-transitory recording/storage medium that is readable by the controller 103, and the controller 103 may read the control program from the medium.

The input interface 105 includes one or more interfaces for input. Examples of the interface for input include physical keys, capacitance keys, a pointing device, a touch screen integrated with a display, a microphone that accepts voice input, and a camera that captures images. Furthermore, the interface for input may include an IC card reader and a scanner or camera for scanning image codes. The input interface 105 accepts an operation by an operator to input information used in the operations of the information processing apparatus 10 and transmits the input information to the controller 103.

The output interface 106 includes one or more interfaces for output. The interface for output is, for example, a display or a speaker. The display is, for example, a liquid crystal display (LCD) or an organic electro-luminescence (EL) display. The output interface 106 outputs information obtained by the operations of the information processing apparatus 10 to a user, an operator, or the like.

Next, the configurations of the imaging apparatus 12, the projection apparatus 13, and the lighting apparatus 14 will be described.

The imaging apparatus 12 includes one or more cameras and their control apparatus. The control apparatus includes a processor that controls the operations of the camera and a communication module for transmitting captured images to the information processing apparatus 10 via the network 11 or peer-to-peer. The camera may, for example, be a monocular camera, a stereo camera, or the like. In particular, when the purpose is to detect the position of a face, an infrared camera and a hot mirror are preferably used, as these can be arranged coaxially without affecting the light from the projection apparatus 13. The imaging apparatus 12 captures images of the face of the user 15 using the camera at an arbitrary frame rate, for example, several hundred frames per second, and transmits the captured images to the information processing apparatus. The frame rate is preferably 300 fps or higher, more preferably 400 fps or higher, and even more preferably 500 fps or higher.

The projection apparatus 13 includes one or more light sources, an optical system, and a control apparatus for these. The control apparatus includes a processor that controls the operations of the light source and the optical system and a communication module for communicating information with the information processing apparatus 10 via the network 11 or peer-to-peer. The light source is a lamp, laser, LED, or the like and emits light including visible light of 380 nm to 780 nm. The optical system may be a transmissive liquid crystal system, a reflective liquid crystal system, a DLP system, an RGB-LED system, or the like. The projection apparatus 13 projects colored light in a pattern according to the information and instructions received from the information processing apparatus 10 at an arbitrary frame rate, for example, several hundred frames per second. For example, the rate is 300 Hz or more, preferably 400 Hz or more, and more preferably 500 Hz or more or 1000 Hz or more.

The lighting apparatus 14 is installed on or near the ceiling of a store, studio, or the like. The lighting apparatus 14 includes a group of LED elements with different peak wavelengths, for example, as light sources and is configured to be able to irradiate ambient light including visible light by selectively turning on and off the group of LED elements.

[Operations of information processing apparatus 10]

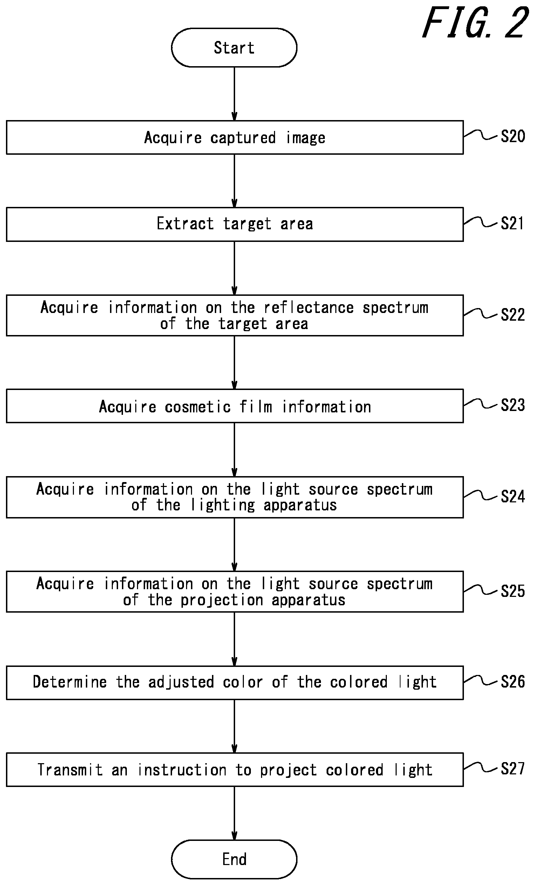

FIG. 2 is a flowchart illustrating an example of operations of the information processing apparatus 10. The procedures of FIG. 2 are executed by the controller 103 of the information processing apparatus 10 in response to an operator's operation when simulating makeup on the user's face with colored light from the projection apparatus 13.

In step S20, the controller 103 acquires a captured image of the face of the user 15. The controller 103 acquires the captured image from the imaging apparatus 12. The captured image is generated by the imaging apparatus 12 at an arbitrary frame rate and transmitted to the information processing apparatus 10.

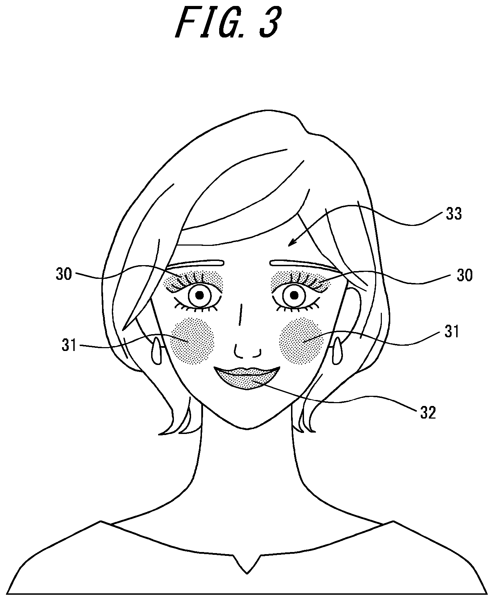

In step S21, the controller 103 extracts a target area from the captured image of the face of the user 15. The controller 103 extracts the target area by any image processing including, for example, pattern matching. As illustrated in FIG. 3, target areas such as eyes 30, cheeks 31, lips 32, and the like are extracted from a face 33 of the user 15. Furthermore, the controller 103 derives the spatial coordinates of each target area.

In step S22, the controller 103 acquires information on the reflectance spectrum of the target area. The reflectance spectrum of the target area may be a reflectance spectrum for each target area or may be a representative reflectance spectrum of the face including the target area. The reflectance spectrum is, for example, the spectral reflectance. For example, an operator measures the spectral reflectance of a target area or an arbitrary area on the face using a color measurement apparatus. The measurement results are inputted into the information processing apparatus 10 by an operator or are transmitted from the color measurement apparatus to the information processing apparatus 10 via the network 11 or by a peer-to-peer connection. Alternatively, the operator may visually classify the skin color of the face including the target area and input the classification identification information into the information processing apparatus 10. For example, the memory 102 stores a table in advance that associates skin color classifications with spectral reflectances, and the controller 103 reads out the corresponding spectral reflectance information from the memory 102 using the input classification identification information. The number of such categories is, for example, 3 to 40. Alternatively, the controller 103 may derive the spectral reflectance of the target area using the color of the target area extracted from the captured image of the user's face, that is, the gradation value of a color system such as RGB or XYZ in the captured image. For example, the memory 102 stores in advance a table, model, or the like that associates the gradation values of a color system that indicates the color of the target area with spectral reflectance. The controller 103 reads out information on the spectral reflectance that corresponds to the color of the target area from the memory 102. Alternatively, the controller 103 may derive the spectral reflectance from the color of the target area using any appropriate algorithm.

A table or model associating the color of the target area with the spectral reflectance is generated in advance as follows. For example, the skin color and spectral reflectance of an arbitrary user are measured using a color measurement apparatus under standard lighting such as white light. A data set associating the skin color with the spectral reflectance is then subjected to cluster analysis using hierarchical cluster analysis, k-means, or the like, for association with representative values such as the average in each cluster, thereby generating the table or model. Such cluster analysis and association of representative values of each cluster are performed by any information processing apparatus. A contact-type colorimeter can be used to measure skin color. The projection apparatus 13 can also be used to project standard illumination and perform color measurement. In this case, the entire face can be illuminated evenly by illuminating the user's face from the front with standard illumination. Furthermore, when the user's face is illuminated from the front, the spectral reflectance varies depending on the direction of the normal to the skin surface, and any information processing apparatus may correct the spectral reflectance according to the angle of the skin surface relative to the front.

In step S23, the controller 103 acquires cosmetic film information. The cosmetic film information is information about the type of cosmetic film to be applied to the target area and the color of the cosmetic film. Types of cosmetic films include eye shadow, blush, lipstick, and the like. The information on the color of the cosmetic film includes a gradation value, in an arbitrary color system, that indicates the color of the cosmetic film, and the reflectance spectrum. The reflectance spectrum can include the spectral reflectance, diffusion coefficient, absorption coefficient, and the like of the cosmetic film. The controller 103 acquires the cosmetic film information by the user or the operator inputting desired cosmetic film information into the information processing apparatus 10. For example, a plurality of pieces of cosmetic film information are stored in advance in the memory 102. The controller 103 displays a selectable combination of cosmetic film type and color, and the cosmetic film information is acquired by the user selecting the desired cosmetic film by any appropriate operation.

The reflectance spectrum of the cosmetic film is derived as follows, for example. First, a cosmetic film is applied at a plurality of thicknesses to a base having a known spectral reflectance, and the operator measures the spectral reflectance of the cosmetic film under each condition using a color measurement apparatus. Then, based on the difference between the measurement results, the reflectance spectrum of the cosmetic film is derived by any information processing means. The base is, for example, a bioskin plate or the like having an uneven surface similar to that of the human skin. Also, color measurements are preferably performed at a plurality of angles and with some degree of spatial resolution. The information processing means includes an estimation model using the Kubelka-Munk theory, an estimation model using machine learning, or the like. An estimation model using machine learning is generated by, for example, performing machine learning on training data that associates the difference in spectral reflectance between the color of the cosmetic film and the base with the difference in spectral reflectance of the measured cosmetic film. The estimation model estimates the spectral reflectance from the color of the cosmetic film. Such an information processing means is implemented by any information processing apparatus.

In step S24, the controller 103 acquires information on the light source spectrum (hereinafter referred to as the ambient light spectrum) of the lighting apparatus 14 that emits the ambient light. The ambient light spectrum is the spectral intensity of the light output from the light source of the lighting apparatus 14. For example, the controller 103 reads out information on the spectral intensity of the lighting apparatus 14 that is stored in advance in the memory 102. Alternatively, for example, the operator measures the spectral intensity of the ambient light using a spectrometer. The measurement results are inputted into the information processing apparatus 10 by an operator or are transmitted from the spectrometer to the information processing apparatus 10 via the network 11 or by a peer-to-peer connection.

In step S25, the controller 103 acquires information on the light source spectrum (hereinafter referred to as the projection light spectrum) of the projection apparatus 13 that projects colored light. The projection light spectrum is the spectral intensity of a standard color output by the light source of the projection apparatus 13. The standard color is a single color that is arbitrarily set and is projected onto areas where no cosmetics are applied. For example, the controller 103 reads out information on the spectral intensity of the standard color from information on the spectral intensity of each light source of the projection apparatus 13 as stored in advance in the memory 102. Alternatively, for example, the operator measures the spectral intensity of the projection light using a spectrometer. The measurement results are inputted into the information processing apparatus 10 by an operator or are transmitted from the spectrometer to the information processing apparatus 10 via the network 11 or by a peer-to-peer connection.

In step S26, the controller 103 determines the adjusted color of the colored light to be projected onto the target area based on the reflectance spectrum of the target area, the reflectance spectrum of the cosmetic film, the ambient light spectrum, and the projection light spectrum, using the following method.

First, the reflected light at the cosmetics area when a cosmetic film is applied to the target area, that is, the target color spectrum $X(\lambda)$ (where $\lambda$ is the wavelength of light), is estimated using Equation 1 below.

$$\text{Equation 1: } X(\lambda) = R(\lambda)(P_{BG}(\lambda) + E(\lambda))$$

Here, $R(\lambda)$ is the spectral reflectance of the cosmetics area, $P_{BG}(\lambda)$ is the spectral intensity of the standard color projected by the projection apparatus 13, and $E(\lambda)$ is the spectral intensity of the ambient light.

Based on the above Equation 1, when the number of light sources of the projection apparatus 13 is a, the target color exhibited by the cosmetics area can be expressed as an a-dimensional vector X to determine the output of the projection apparatus 13 uniquely. For example, in a projector using LED light sources of three colors, R, G, and B, the number of light sources is three. In this case, for the $i^{th}$ ($1 \leq i \leq a$) element $X_i$ of the vector X, Equation 2 below is derived over the wavelength $\lambda$ in the visible light region (360 nm to 830 nm).

Equation 2:

$$X_i = \sum_{\lambda=360nm}^{830nm} \{(P(\lambda) + E(\lambda))R(\lambda)S_i(\lambda)\}$$

Here, $P(\lambda)$ is the spectral intensity of the projection apparatus 13, $E(\lambda)$ is the spectral intensity of the ambient light, $R(\lambda)$ is the spectral reflectance of the target area, and $S_i(\lambda)$ is the color matching function (RGB, XYZ, or the like) corresponding to the reflectance spectrum of the cosmetic film.

Equation 3 below is derived from Equation 2, with the intensity relative to the maximum output of the $j^{th}$ ($1 \leq j \leq a$) light source in the projection apparatus 13 being $I_j$ (where $0 \leq I_j \leq 1$).

Equation 3:

$$\begin{pmatrix} X_1 \\ X_2 \\ \vdots \\ X_a \end{pmatrix} = \begin{pmatrix} k_{11} & \cdots & k_{a1} \\ \vdots & \ddots & \vdots \\ k_{1a} & \cdots & k_{aa} \end{pmatrix} \begin{pmatrix} I_1 \\ I_2 \\ \vdots \\ I_a \end{pmatrix} + \begin{pmatrix} e_1 \\ e_2 \\ \vdots \\ e_a \end{pmatrix} = MI + E$$

Here, $k_{ji}$ and $e_i$ are as follows.

$$k_{ji} = \Sigma P_{max,j}(\lambda)R(\lambda)Si(\lambda)$$

$$e_i = \Sigma E(\lambda)R(\lambda)S_i(\lambda)$$

Furthermore, $P_{max,j}(\lambda)$ is the maximum output of the j$^{th}$ light source.

Equation 4 below is derived from Equation 3 above.

Equation 4:

$$I = M^{-1}(X - E)$$

In Equation 4 above, the controller 103 derives a matrix I, indicating the intensity of each light source such that the reflected light at the target area exhibits the target color X, as the value of the adjusted color of the colored light. The adjusted color is derived by the controller 103 performing the calculations of the above Equations 1 to 4 according to any appropriate algorithm. If the adjusted color has a saturation that exceeds an arbitrary standard, the controller 103 may correct the value of the matrix I so that colored light of a color that contrasts with the adjusted color is irradiated around the adjusted color. Alternatively, if the normal of the target area onto which the adjusted color is irradiated forms an angle, with the optical axis of the projection apparatus 13, that exceeds an arbitrary reference value, such as when the target area is the cheek, the controller 103 may correct the value of the matrix I so as to reduce the brightness of the adjusted color.

In step S27, the controller 103 transmits an instruction to the projection apparatus 13 to project colored light. The instruction includes information specifying the adjusted color. The controller 103 generates the information based on the results derived in step S26. The information identifies the light sources for projecting the adjusted color onto the target area and specifies the intensity of each light source, based on spatial coordinates of the projection apparatus 13 and spatial coordinates of the target area as stored in advance in the memory 102.

When the projection apparatus 13 projects the colored light of the adjusted color onto the target area in response to the instruction from the information processing apparatus 10, the target area exhibits the target color, and makeup is simulated on the face of the user 15.

According to the procedure of FIG. 2 described above, the accuracy can be improved when using colored light to express a target color of a cosmetics area for which the target color differs due to the combination of the skin color of the user 15 and the color of the cosmetic film. For example, when cosmetics are being tried on, accurate reproduction of the color of the makeup is important. However, since the color of the skin after applying the cosmetics and the color obtained as a result of projecting an image from a projector may change depending on the user's skin color, color correction is necessary to reproduce the color of the cosmetics accurately. The reflectance spectrum of skin differs for each user, which usually makes it difficult to correct the color of moving objects with complex shapes, such as faces. However, according to the present embodiment, the desired color can be easily and accurately expressed even for objects that are dynamic and have different colors for each individual, such as faces.

The procedures of FIG. 2 may be performed in response to, for example, facial movements of the user 15. For example, when the controller 103 detects a change over time in the face of the user 15 in the captured image, the controller 103 executes steps S21 and S27. By doing so, even if the face of the user 15 moves after the adjusted color is derived once, a makeup simulation that follows the movement of the face can be executed.

Furthermore, steps S21 to S26 may be performed for each target area. The controller 103 may detect a plurality of target areas in step S21, and if the cosmetic film information acquired in step S23 covers target areas of different types, the controller 103 may perform steps S25 to S26 for each target area. Since the reflectance spectrum differs depending on the type of target area, the adjusted color can be determined with higher accuracy.

Furthermore, the present embodiment also includes a case in which the information processing apparatus 10 operates in a stand-alone state without being connected to the network 11 in a portion of the procedures in FIG. 2.

In the above description, an example has been given in which the subject of the makeup simulation is a user. However, the subject may be an animal other than a person, such as a pet. The present embodiment is also applicable when projection mapping is performed as part of a show or other production, apart from a makeup simulation. Alternatively, the present embodiment can also be applied to cases in which projection mapping is performed on a part or all of an inanimate object, such as a vehicle or mechanical structure, as the target object.

In the above, a processing/control program that defines the operations of the information processing apparatus 10 may be stored on a cloud server or the like and downloaded to the information processing apparatus 10 via the network 11, or may be stored on a non-transitory computer readable recording/storage medium and read by the information processing apparatus 10 from the medium.

While embodiments have been described with reference to the drawings and examples, it should be noted that various modifications and amendments may easily be implemented by those skilled in the art based on the present disclosure. Accordingly, such modifications and amendments are included within the scope of the present disclosure. For example, functions or the like included in each means, each step, or the like can be rearranged without logical inconsistency, and a plurality of means, steps, or the like can be combined into one or divided.

Examples of some embodiments of the present disclosure are described below. However, it should be noted that the embodiments of the present disclosure are not limited to these examples.

[Appendix 1]
A system comprising:

an imaging apparatus configured to capture an image of an object;
an information processing apparatus configured to detect a target area in the object based on a captured image of the object; and
a projection apparatus configured to project colored light onto the target area, wherein
the information processing apparatus is configured to instruct the projection apparatus regarding a color of the colored light so that reflected light at the target area exhibits a target color, based on information on a reflectance spectrum at the target area and information on a light source spectrum of the projection apparatus.

[Appendix 2]
The system according to appendix 1, wherein
the information processing apparatus is configured to determine a color of the colored light by taking into account information on a light source spectrum of ambient light illuminating the object.

[Appendix 3]
The system according to appendix 1 or 2, wherein
the information processing apparatus is configured to receive input of information on a classification of color of the target area and determine the reflectance spectrum based on the classification.

[Appendix 4]
The system according to any one of appendices 1 to 3, wherein
for each target area in a plurality of target areas, the information processing apparatus is configured to set the target color based on information on a cosmetic film and information on a color of the target area and determine the color of the colored light for the target area.

[Appendix 5]
The system according to any one of appendices 1 to 4, wherein
the system is used to check a final appearance of cosmetics without applying the cosmetics to the object.

[Appendix 6]
An information processing apparatus comprising:

a communication interface; and
a controller configured to communicate via the communication interface, wherein
the controller is configured to acquire a captured image of an object from an imaging apparatus, detect a target area in the object based on the captured image, instruct a projection apparatus regarding a color of colored light so that reflected light at the target area exhibits a target color, based on information on a reflectance spectrum at the target area and information on a light source spectrum of the projection apparatus, and cause the projection apparatus to project the colored light onto the target area.

[Appendix 7]
The information processing apparatus according to appendix 6, wherein
the controller is configured to determine a color of the colored light by taking into account information on a light source spectrum of ambient light illuminating the object.

[Appendix 8]
The information processing apparatus according to appendix 6 or 7, wherein
the controller is configured to receive input of information on a classification of color of the target area and determine the reflectance spectrum based on the classification.

[Appendix 9]
The information processing apparatus according to any one of appendices 6 to 8, wherein
for each target area in a plurality of target areas, the controller is configured to set the target color based on information on a cosmetic film and information on a color of the target area and determine the color of the colored light for the target area.

[Appendix 10]
The information processing apparatus according to any one of appendices 6 to 9, wherein
the information processing apparatus is used to check a final appearance of cosmetics without applying the cosmetics to the object.
[Appendix 11]
A method of operating a system comprising an imaging apparatus, a projection apparatus, and an information processing apparatus, the method comprising:

capturing, by the imaging apparatus, an image of an object;
detecting, by the information processing apparatus, a target area in the object based on a captured image of the object and instructing the projection apparatus regarding a color of colored light so that reflected light at the target area exhibits a target color, based on information on a reflectance spectrum at the target area and information on a light source spectrum of the projection apparatus; and
projecting, by the projection apparatus, the colored light onto the target area.

[Appendix 12]
The method of operating a system according to appendix 11, further comprising
determining, by the information processing apparatus, a color of the colored light by taking into account information on a light source spectrum of ambient light illuminating the object.
[Appendix 13]
The method of operating a system according to appendix 11 or 12, further comprising
receiving, by the information processing apparatus, input of information on a classification of color of the target area and determining the reflectance spectrum based on the classification.
[Appendix 14]
The method of operating a system according to any one of appendices 11 to 13, further comprising
for each target area in a plurality of target areas, setting, by the information processing apparatus, the target color based on information on a cosmetic film and information on a color of the target area and determining the color of the colored light for the target area.
[Appendix 15]
The method of operating a system according to any one of appendices 11 to 14, wherein
the system is used to check a final appearance of cosmetics without applying the cosmetics to the object.

REFERENCE SIGNS LIST

| 10 | Information processing apparatus |
| 11 | Network |
| 12 | Imaging apparatus |
| 13 | Projection apparatus |
| 14 | Lighting apparatus |
| 101 | Communication interface |
| 102 | Memory |
| 103 | Controller |
| 105 | Input interface |
| 106 | Output interface |

**Claims**

1. A system comprising:

   an imaging apparatus configured to capture an image of an object;
   an information processing apparatus configured to detect a target area in the object based on a captured image of the object; and
   a projection apparatus configured to project colored light onto the target area, wherein
   the information processing apparatus is configured to instruct the projection apparatus regarding a color of the colored light so that reflected light at the target area exhibits a target color, based on information on a reflectance spectrum at the target area and information on a light source spectrum of the projection apparatus.

2. The system according to claim 1, wherein
   the information processing apparatus is configured to determine a color of the colored light by taking into account information on a light source spectrum of ambient light illuminating the object.

3. The system according to claim 1, wherein
the information processing apparatus is configured to receive input of information on a classification of color of the target area and determine the reflectance spectrum based on the classification.

4. The system according to claim 1, wherein
for each target area in a plurality of target areas, the information processing apparatus is configured to set the target color based on information on a cosmetic film and information on a color of the target area and determine the color of the colored light for the target area.

5. The system according to claim 1, wherein
the system is used to check a final appearance of cosmetics without applying the cosmetics to the object.

6. An information processing apparatus comprising:

a communication interface; and
a controller configured to communicate via the communication interface, wherein
the controller is configured to acquire a captured image of an object from an imaging apparatus, detect a target area in the object based on the captured image, instruct a projection apparatus regarding a color of colored light so that reflected light at the target area exhibits a target color, based on information on a reflectance spectrum at the target area and information on a light source spectrum of the projection apparatus, and cause the projection apparatus to project the colored light onto the target area.

7. The information processing apparatus according to claim 6, wherein
the controller is configured to determine a color of the colored light by taking into account information on a light source spectrum of ambient light illuminating the object.

8. The information processing apparatus according to claim 6, wherein
the controller is configured to receive input of information on a classification of color of the target area and determine the reflectance spectrum based on the classification.

9. The information processing apparatus according to claim 6, wherein
for each target area in a plurality of target areas, the controller is configured to set the target color based on information on a cosmetic film and information on a color of the target area and determine the color of the colored light for the target area.

10. The information processing apparatus according to claim 6, wherein
the information processing apparatus is used to check a final appearance of cosmetics without applying the cosmetics to the object.

11. A method of operating a system comprising an imaging apparatus, a projection apparatus, and an information processing apparatus, the method comprising:

capturing, by the imaging apparatus, an image of an object;
detecting, by the information processing apparatus, a target area in the object based on a captured image of the object and instructing the projection apparatus regarding a color of colored light so that reflected light at the target area exhibits a target color, based on information on a reflectance spectrum at the target area and information on a light source spectrum of the projection apparatus; and
projecting, by the projection apparatus, the colored light onto the target area.

12. The method of operating a system according to claim 11, further comprising
determining, by the information processing apparatus, a color of the colored light by taking into account information on a light source spectrum of ambient light illuminating the object.

13. The method of operating a system according to claim 11, further comprising
receiving, by the information processing apparatus, input of information on a classification of color of the target area and determining the reflectance spectrum based on the classification.

**14.** The method of operating a system according to claim 11, further comprising
for each target area in a plurality of target areas, setting, by the information processing apparatus, the target color based on information on a cosmetic film and information on a color of the target area and determining the color of the colored light for the target area.

**15.** The method of operating a system according to claim 11, wherein
the system is used to check a final appearance of cosmetics without applying the cosmetics to the object.

# FIG. 1

Information processing apparatus

| Communication interface | 101 |
| Memory | 102 |
| Controller | 103 |
| Input interface | 105 |
| Output interface | 106 |

*FIG. 2*

```
        ┌─────────────┐
        │    Start    │
        └──────┬──────┘
               │
               ▼
┌───────────────────────────────────┐
│      Acquire captured image       │───S20
└───────────────┬───────────────────┘
               │
               ▼
┌───────────────────────────────────┐
│        Extract target area        │───S21
└───────────────┬───────────────────┘
               │
               ▼
┌───────────────────────────────────┐
│ Acquire information on the reflectance spectrum │───S22
│          of the target area       │
└───────────────┬───────────────────┘
               │
               ▼
┌───────────────────────────────────┐
│    Acquire cosmetic film information    │───S23
└───────────────┬───────────────────┘
               │
               ▼
┌───────────────────────────────────┐
│ Acquire information on the light source spectrum │───S24
│       of the lighting apparatus       │
└───────────────┬───────────────────┘
               │
               ▼
┌───────────────────────────────────┐
│ Acquire information on the light source spectrum │───S25
│      of the projection apparatus      │
└───────────────┬───────────────────┘
               │
               ▼
┌───────────────────────────────────┐
│ Determine the adjusted color of the colored light │───S26
└───────────────┬───────────────────┘
               │
               ▼
┌───────────────────────────────────┐
│ Transmit an instruction to project colored light │───S27
└───────────────┬───────────────────┘
               │
               ▼
        ┌─────────────┐
        │     End     │
        └─────────────┘
```

# FIG. 3

## INTERNATIONAL SEARCH REPORT

| International application No. |
| --- |
| **PCT/JP2024/031055** |

**A. CLASSIFICATION OF SUBJECT MATTER**

*H04N 9/31*(2006.01)i; *H04N 23/745*(2023.01)i
FI: H04N9/31 790; H04N23/745

According to International Patent Classification (IPC) or to both national classification and IPC

**B. FIELDS SEARCHED**

Minimum documentation searched (classification system followed by classification symbols)

H04N9/31; H04N23/745

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2012-105232 A (NIKON CORPORATION) 31 May 2012 (2012-05-31) paragraphs [0009]-[0029], fig. 1-7 | 1-2, 5-7, 10-12, 15 |
| A | | 3-4, 8-9, 13-14 |
| Y | JP 2004-94773 A (NEC CORPORATION) 25 March 2004 (2004-03-25) paragraphs [0045]-[0081], fig. 1-10 | 1-2, 5-7, 10-12, 15 |
| Y | JP 2001-186923 A (L'OREAL) 10 July 2001 (2001-07-10) paragraph [0030] | 2, 7, 12 |
| A | JP 2022-525115 A (L'OREAL) 11 May 2022 (2022-05-11) paragraph [0067] | 1-15 |
| A | 瞿 佳雯, 高速カラープロジェクタを用いたダイナミックフェイシャルプロジェクション マッピングの試作, 情報処理学会 研究報告 コンピュータビジョンとイメージメディア (CVIM) 2020-CVIM-220 , 16 January 2020, pp. 113-116, (KU, Keibun, IPSJ SIG Technical Report: Computer Vision and Image Media) | 1-15 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **04 October 2024** | **22 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/031055** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2012-215504 A (KAO CORPORATION) 08 November 2012 (2012-11-08) entire text, all drawings | 1-15 |

Form PCT/ISA/210 (second sheet) (July 2022)

## INTERNATIONAL SEARCH REPORT
### Information on patent family members

International application No.

**PCT/JP2024/031055**

| Patent document cited in search report | | | Publication date (day/month/year) | Patent family member(s) | | | Publication date (day/month/year) |
|---|---|---|---|---|---|---|---|
| JP | 2012-105232 | A | 31 May 2012 | (Family: none) | | | |
| JP | 2004-94773 | A | 25 March 2004 | (Family: none) | | | |
| JP | 2001-186923 | A | 10 July 2001 | US column 3, lines 4-8 | 6810130 | B1 | |
| | | | | EP | 1089191 | A1 | |
| | | | | FR | 2799022 | A1 | |
| JP | 2022-525115 | A | 11 May 2022 | US paragraph [0076] | 2022/0183447 | A1 | |
| | | | | WO | 2020/182991 | A1 | |
| | | | | EP | 3709638 | A1 | |
| | | | | CN | 113574860 | A | |
| JP | 2012-215504 | A | 08 November 2012 | (Family: none) | | | |

Form PCT/ISA/210 (patent family annex) (July 2022)

**REFERENCES CITED IN THE DESCRIPTION**

**Patent documents cited in the description**

- JP 2023141792 A

- JP 2017147638 A